# EUROPEAN PATENT SPECIFICATION

(11) **EP 4 065 637 B1**
(45) Date of publication and mention of the grant of the patent: **07.01.2026**
(21) Application number: 20810970.2
(22) Date of filing: 25.11.2020
(51) Int. Cl.: C08K 5/00, C08K 5/5357, C08L 67/02

(54) **FLAME-RETARDANT POLYESTER MOLDING COMPOSITIONS**
FLAMMHEMMENDE POLYESTERFORMZUSAMMENSETZUNGEN
COMPOSITIONS DE MOULAGE DE POLYESTER IGNIFUGES

(30) Priority: 26.11.2019 EP 19211495
(43) Date of publication of application: 05.10.2022
(73) Proprietor: BASF SE, 67056 Ludwigshafen am Rhein (DE)
(72) Inventor: ROTH, Michael, 67056 Ludwigshafen (DE); DOERING, Manfred, 64289 Darmstadt (DE); GOEDDERZ, Daniela, 64289 Darmstadt (DE)
(74) Representative: BASF IP Association
(86) International application number: PCT/EP2020/083307
(87) International publication number: WO 2021/105175

(56) References cited:
- WO-A1-2012/142634
- WO-A1-2018/026621
- US-A- 4 317 769
- US-A1- 2017 044 342
- US-A1- 2019 249 004
- DOERING, MANFRED; BURK, BETTINA: "Phosphorus containing salts as flame retardants in epoxy resins and engineering plastics", 24TH ANNUAL CONFERENCE ON RECENT ADVANCES IN FLAME RETARDANCY OF POLYMERIC MATERIALS 2013 : STAMFORD, CONNECTICUT, USA, 20 - 22 MAY 2013, 2013, pages 163 - 169, XP002801889, ISBN: 978-1-63266-312-2
- DATABASE WPI Week 200168, Derwent World Patents Index; AN 2001-599625, XP002801890

## Description

The present invention relates to a thermoplastic molding composition comprising a thermoplastic polyester, a method of producing fibers, foils and moldings comprising the use of the thermoplastic molding composition, and a fiber, foil or molding obtained from the thermoplastic molding composition.

Reinforced or non-reinforced thermoplastic polyesters are used for the production of electronic parts, such as connectors, frames, moving parts, transformers, micro-motors, amongst others. In most of these applications, flame retardancy is needed and is usually provided by flame-retardant systems based on a combination of brominated flame retardants with diantimony trioxide as synergist. However, this type of flame-retardant system has a limitation, because diantimony trioxide, being a very efficient synergist, tends to significantly increase the smoke yield, which impairs visibility and creates problems for evacuation of people in the case of fire. Furthermore, diantimony trioxide has a very high bulk density which increases the specific gravity of molded parts and has negative impact on electrical properties such as tracking index (CTI). This is especially undesirable in transportation and aviation. Even more, some eco labels require elimination of diantimony trioxide from thermoplastic parts.

Although there is a clear need for low diantimony trioxide or diantimony trioxide-free flame retardant plastics, such usually require significant increase in the loading of brominated flame retardants.

WO 2012/088080 relates to a diantimony trioxide-free flame-retardant thermoplastic composition comprising: a) at least one thermoplastic polyester or polyamide; (b) at least one brominated flame retardant; and (c) at least one metal phosphonate or metal phosphinate. Suitable metal phosphonates or metal phosphinates are of the following formula: 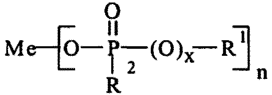 where Me is a metal, R¹ and R² are the same or different linear or branched or cyclic alkyls from C₁ to C₆ or benzyl, n is a metal valency and can be 1, 2, 3 or 4, x is 1 for metal phosphonates and x is 0 for metal phosphinates.

WO 2018/073813 concerns a composition comprising a polyester and a mixture of flame retardants having at least the following two components: calcium hypophosphite and bromine-containing polymer. The composition is substantially diantimony trioxide-free, which means that the concentration of diantimony trioxide in the composition is well below the acceptable amount used in plastics composites in conjunction with halogenated additives, e.g., not more than 1.0% by weight, more preferably up to 0.5% by weight, e.g., 0.0 to 0.3% by weight (based on the total weight of the composition). Most preferably, the composition is totally devoid of diantimony trioxide.

WO 2018/073819 concerns a composition comprising a polyester and a mixture of flame retardants having at least the following two components: aluminum hypophosphite and bromine-containing polymer. The composition is substantially free of diantimony trioxide, whereby "substantially free" is defined as in WO 2018/073818.

EP 1 657 972 A1 concerns phosphinate complexes of formula (I) 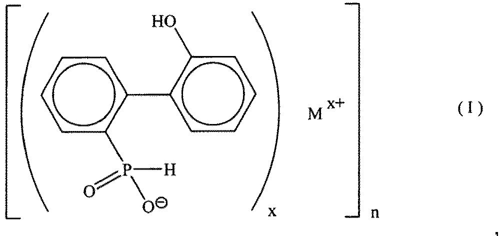 wherein M is a metal of the 2^{nd}, 3^{rd}, 12^{th}, or 13^{th} group of the Periodic Table of Elements; x is 2 or 3; and n is ≥ 10.

Further, EP 1 657 972 A1 concerns phosphinate complexes of formula (II) 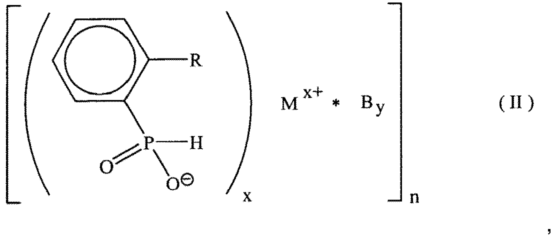 wherein M is a metal of the 2^{nd}, 3^{rd}, 12^{th}, or 13^{th} group of the Periodic Table of Elements; x is 2 or 3; R is a hydrogen atom or a 2-hydroxy phenyl residue; B is a Lewis base, y is 1 or 2; and n is 1 to 100.

EP 1 657 972 A1 further concerns flame retardants or polymers comprising the phosphinate complexes mentioned above, as well as the use of said phosphinate complexes as flame retardants, especially for polyester, polyamides, epoxide resins and products prepared, such as fibers and bases material for conductor boards.

US 4,317,769 relates to a flame retardant comprising alkali metal and/or alkaline earth metal salts of a cyclic phosphorus compound represented by formula I 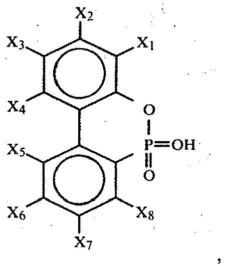 wherein each of X₁ to X₈ represents hydrogen, halogen, cyano, acyl, alkyl, halogen-substituted alkyl, aryl, halogen-substituted aryl or aralkyl.

JP 2001 139 586 A concerns a method of producing a monohydroxy organic cyclic phosphorus compound and its metal salt, having a high purity and high quality, and capable of being used as a stabilizer, a flame retardant, etc. of an organic polymer, especially an electronic material or optical material in a sintered process, safely and in a high yield. The monohydroxy organic cyclic phosphorus compound has the following general formula (1): 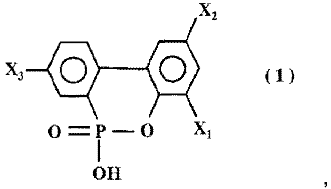 wherein X₁, X₂ and X₃ are each H, a halogen atom, an alkyl group, a cycloalkyl group, an aryl group or an aralkyl group.

In view of the relevant art mentioned above, it is an object of the present application to provide diantimony trioxide-free flame-retardant thermoplastic molding compositions based on thermoplastic polyesters characterized by a high flame retardancy and/or high glow-wire resistance. Glow-wire resistance thereby means that the flame-retardant composition reproducibly gives no ignition in accordance to the IEC 60695-2-13 GWIT test with glow-wire temperatures of at least 750°C at various wall thicknesses (plaques). Ignition means that a flame is visible for more than 5 s. In case of glow wire end product test (GWEPT according to IEC 60695-2-11) ignition means that a flame is visible for more than 2 s (IEC 60335-1).

The object is solved by the provision of a thermoplastic molding composition comprising
A) from 10 to 98% by weight of a thermoplastic polyester
B) from 0.5 to 20% by weight of a metal salt of the following formula (I) 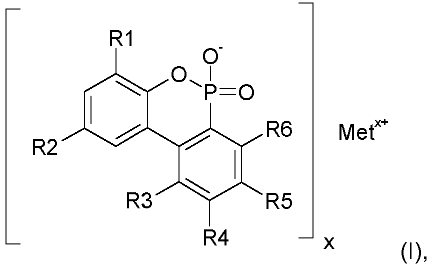 wherein
   R¹, R², R³, R⁴, R⁵ and R⁶
   are each independently hydrogen or C₁-C₄ alkyl;
   x is 1, 2, 3 or 4;
   Met is a metal respectively metalloid of the 1^{st}, 2^{nd}, 13^{th}, 14^{th} or 15^{th} group of the Periodic Table of Elements (IUPAC), a transition metal of the 3^{rd} to 12^{th} group of the Periodic Table of Elements (IUPAC), a lanthanoid metal or an oxide derivative of one of the metal metalloids or transition metals mentioned;
C) from 1.5 to 30% by weight of the flame-retardant combination made of
   C1) a halogen-containing flame retardant
   C2) an antidripping agent
D) from 0 to 40% by weight of other additives,
where the total of the percentages by weight of components A) to D) is 100%.

The object is further solved by a method of producing fibers, foils and moldings comprising the use of the inventive thermoplastic molding composition, and by a fiber, foil or molding, preferably an injection molded electronic component, obtained from the inventive thermoplastic molding composition.

It has been found by the inventors that diantimony trioxide-free molding compositions having a high flame retardancy (low after-flame time and low flaming droplet in the UL 94-V test and/or high glow-wire resistance according to DIN ISO 60695-2-12) are provided when a synergistic mixture of
- a metal salt of formula (I),
- a halogen-containing flame retardant, and
- an anti-dripping agent
are employed.

The present invention therefore preferably relates to the inventive thermoplastic molding composition, wherein the thermoplastic molding composition is free of diantimony trioxide (Sb₂O₃).

### Component A)

The molding compositions of the present invention comprise, as component A), from 10 to 98% by weight, preferably from 25 to 95% by weight, and in particular from 31 to 80% by weight of at least one thermoplastic polyester, where the total of the percentages by weight of components A) to D) is 100%.

A preferred thermoplastic polyester A) is a semi-crystalline or amorphous polyester, based on dicarboxylic acids and diols, preferably having a viscosity number of from 50 to 150 mL/g, more preferably 80 to 150 mL/g, determined in a 0.5% by weight solution in phenol/dichlorobenzene (1:1) at 25°C according to DIN 53728/ISO 307.

The dicarboxylic acids used are aliphatic or aromatic dicarboxylic acids, preferably having 4 to 18 carbon atoms, more preferably selected from the group consisting of phthalic acid, terephthalic acid, dimethyl terephthalic acid, isophthalic acid, naphthalene-1,4-dicarboxylic acid, naphthalene-2,3-dicarboxylic acid, naphthalene-2,6-dicarboxylic acid, cyclohexane dicarboxylic acid, cyclohexene diacetic acid, diphenyl-4,4'-dicarboxylic acid, succinic acid, glutaric acid, adipic acid, azelaic acid, dodecanedioic acid, and sebacic acid, or mixtures thereof.

Preferred dicarboxylic acids are aromatic dicarboxylic acids of the group of the carboxylic acids mentioned above. More preferred are terephthalic acid, naphthalene dicarboxylic acid, preferably 2,6-naphtalene dicarboxylic acid, and isophthalic acid, and mixtures of these. More preferred dicarboxylic acids are terephthalic acid and 2,6-naphthalene dicarboxylic acid, and mixtures thereof.

Up to 30 mol%, preferably not more than 10 mol%, of the aromatic dicarboxylic acids mentioned above may be replaced by aliphatic or cycloaliphatic dicarboxylic acids, such as adipic acid, azelaic acid, sebacic acid, dodecanedioic acid and cyclohexane dicarboxylic acid. Most preferably, no aliphatic or cycloaliphatic dicarboxylic acids are present.

Most preferably, the dicarboxylic acid is terephthalic acid.

The diols are preferably selected from the group consisting of cycloaliphatic diols, preferably having 6 to 20 carbon atoms, most preferably 6 carbon atoms, and aliphatic diols, preferably having 2 to 20 carbon atoms, more preferably 2 to 6 carbon atoms, most preferably selected from the group consisting of ethylene glycol, diethylene glycol, triethylene glycol, 1,4-cyclohexene dimethanol, propane-1,3-diol, propene-1,2-diol, butane-1,2-diol, butane-1,4-diol, pentene-1,5-diol, hexene-1,6-diol, 3-methylpentene-2-4-diol, 2-methylpentene-1,4-diol, 2,2,4-trimethylpentene-1,3-diol, hexane-1,3-diol, hexane-1,4-diol, 2,2-bis(4-hydroxycyclohexyl)propane, 2,4-dihydroxy-1,1,3,3-tetramethylcyclobutane isosorbitol, poly(alkylene oxide)glycols containing a total of 3 to 12 carbon atoms including up to 3 or 4 oxygen atoms with the remaining atoms being hydrocarbon atoms, preferably poly(oxyethylene)diol, poly(oxypropylene)diol, or poly(oxytetramethylene)diol, and mixtures thereof. More preferably, the diols are aliphatic diols, especially ethylene glycol, butane-1,4-diol or propane-1,3-diol, poly(oxyethylene)diol, poly(oxypropylene)diol, or poly(oxytetramethylene)diol, and mixtures thereof.

Particularly preferred thermoplastic polyesters A) are terephthalates derived from alkane diols having 2 to 6 carbon atoms, especially ethylene glycol, butane-1,4-diol or propane-1,3-diol. Particular preference is therefore given to polyethylene terephthalate, polybutylene terephthalate and polypropylene terephthalate, and mixtures thereof.

Preference is also given to polyethylene terephthalate and/or polybutylene terephthalate which comprise, as other monomer units, up to 1% by weight, preferably up to 0.7% by weight, of 1,6-hexane diol and/or 2-methyl-1,5-pentane diol.

As mentioned above, the thermoplastic molding composition may comprise as component A) a mixture of polyesters, for example a mixture of polybutylene terephthalate and polyethylene terephthalate. The proportion of the polyethylene terephthalate in said mixture is for example up to 50% by weight, preferably from 10 to 35% by weight, based on 100% by weight of component A.

In a further embodiment, PET recyclate (also termed scrap PET) optionally mixed with polyalkylene terephthalate, such as PBT, is used.

Recyclates are generally:
1) That known as post-industrial recyclate: these materials are production waste arriving during polycondensation or during processing, e.g. sprues from injection molding, start-up material from injection molding or extrusion, or edge trims from extruded sheets or films.
2) Post-consumer recyclate: these materials are plastic items which are collected and treated after use by the end consumer. Low molded PET bottles for mineral water, soft drinks and juices are easily the predominant items in terms of quantity.

Both types of recyclates may be used either in the form of regrind or in the form of pelletized materials. In the latter case, the crude recyclates are separated and purified and then melted and palletized using an extruder. This usually facilitates handling and free flow, and metering for further steps in processing.

The thermoplastic polyesters mentioned above are either commercially available or prepared by processes known in the art. Usually, the polyesters are produced by reacting one or more dicarboxylic acid, or their esters or other ester-forming derivatives, with the dihydroxy compound mentioned above in a manner known per se.

It is further possible that component A) is a blend of at least one of the polyesters mentioned above with at least one blend component.

Suitable blend components are selected from the group consisting of polycarbonates and liquid crystalline polyesters, copolymers of polybutyleneadipate and terephthalate and aliphatic polyesters like epsilon-polycaprolactone. The one or more blend components are present in an amount of 0 to 30 % by weight, (total amount of blend components), based on the total amount of component A). In the case that one or more blend components are present, said blend components are present in an amount of 0.1 to 30 % by weight (total amount of blend components), based on the total amount of component A).

### Component B)

The molding compositions of the present invention comprise, as component B), from 0.5 to 20% by weight, preferably from 3 to 17% by weight, more preferably from 5 to 15% by weight of at least one metal salt of formula (I), where the total of the percentages by weight of components A) to D) is 100%. 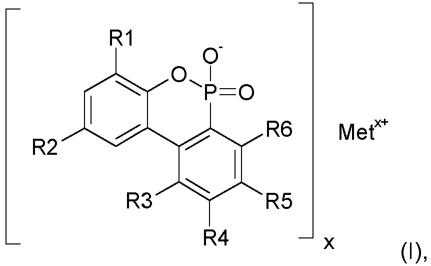 wherein
R¹, R², R³, R⁴, R⁵ and R⁶
are each independently hydrogen or C₁-C₄ alkyl;
x is 1, 2, 3 or 4;
Met is a metal respectively metalloid of the 1^{st}, 2^{nd}, 13^{th}, 14^{th} or 15^{th} group of the Periodic Table of Elements (IUPAC), a transition metal of the 3^{rd} to 12^{th} group of the Periodic Table of Elements (IUPAC), a lanthanoid metal or an oxy derivative of one of the metal metalloids or transition metals mentioned.

Preferably, Met in the metal salt B) of formula (I) is a metal respectively metalloid of the 13^{th}, 14^{th} or 15^{th} group of the Periodic Table of Elements (IUPAC), a transition metal of the 3^{rd} to 12^{th} group of the Periodic Table of Elements (IUPAC), a lanthanoid metal or an oxy derivative of one of the metal metalloids or transition metals mentioned. More preferably, Met is selected from the group consisting of Al, Ge, Sn, Bi, Ti, V, Cr, Mn, Fe, La, Ce, OTi, OV, OCr, OSn and OBi. Most preferably, Met is Al, and x is 3.

R¹, R², R³, R⁴, R⁵ and R⁶ in the metal salt of formula (I) are preferably hydrogen.

I.e. most preferred is a metal salt of formula (Ia) 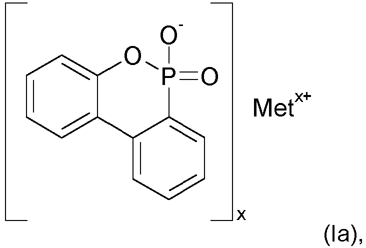 wherein x is 2,3 or 4, preferably 3; and
Met is Al, Ge, Sn, Bi, Ti, V, Cr, Mn, Fe, La, Ce, OTi, OV, OCr, OSn and OBi, preferably Al.

The metal salts of formula (I) respectively of formula (la) are metal salts of 10-hydroxy-9,10-dihydro-9-oxa-10-phosphophenantrenoxide (DOPO acid).

Said metal salts are for example prepared starting from DOPO acid, which is commercially available, which is reacted with suitable metal salts comprising the metal Met mentioned in the definition of formula (I) respectively (Ia). Suitable metal salts are for example hydroxides, halides, especially chlorides, or sulfates of the metals Met mentioned in formula (I), respectively (Ia).

### Component C)

The molding compositions of the present invention comprise, as component C),
from 1.5 to 30% by weight, preferably from 2 to 23% by weight, more preferably from 15 to 22% by weight of at least one flame retardant combination made of
C1) a halogen-containing flame retardant
C2) an antidripping agent,
where the total of the percentages by weight of components A) to D) is 100%.

Preferably, component C) comprises
from 95 to 99.95% by weight, preferably from 96 to 99.50% by weight, more preferably from 97 to 99.0% by weight of C1) and
from 0.05 to 5% by weight, preferably 0.1 to 2% by weight, more preferably from 0,25 to 3% by weight of C2).

### Component C2)

As anti-dripping agent C2), any antidripping agent known in the art may be used. Preferably, the antidripping agent C2) is a compound selected from the group consisting of fluorine-containing polymers, siloxane-based anti dripping agents, and mixtures thereof. More preferably, the anti-dripping agent comprises fluorine-containing polymers or a siloxane.

Preferred fluorine-containing polymers are selected from the group consisting of poly(tetrafluoroethylene) (PTFE), tetrafluoroethylene/hexafluoropropylene copolymers, tetrafluoroethylene/ethylene copolymers, poly(vinylidene fluoride), poly(chlorotrifluoroethylene), and mixtures thereof. A preferred fluorine-containing polymer is poly(tetrafluoroethylene) (PTFE). Said poly(tetrafluoroethylene) may be used as PTFE powder. The fluorine-containing polymers are commercially available or prepared by processes known in the art.

A suitable siloxane is preferably a siloxane-based antidripping agent comprising polydimethyl siloxane. Suitable siloxane-based antidripping agents are commercially available.

### Component C1)

Component C1) is a halogen-containing flame retardant, preferably a bromine- or chlorine-containing flame retardant, more preferably a bromine-containing flame retardant.

Suitable halogen-containing flame retardants are known by a person skilled in the art. Preferred halogen-containing flame retardants are oligomeric and polymeric halogen-containing flame retardants.

Preferred bromine-containing flame retardants are selected from the group consisting of brominated diphenylester, brominated trimethylphenylindanes (e.g. FR 1808 from DSB), tetrabromobisphenol A, brominated oligo carbonate, preferably brominated oligo carbonates of tetrabromo-bis-phenol A having the following formula, wherein n is more than 2: 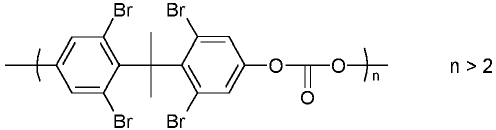 (e.g. BC 52 or BC 58 from Great Lakes),
polypentabrombenzylacrylate of the following formula, wherein n is more than 4 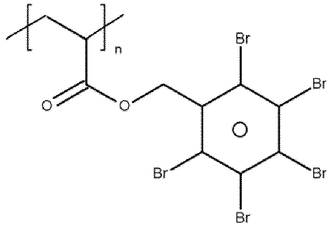 (e.g. FR 1025 from ICL-IP),
oligomeric reaction products of tetrabromo-bis-phenol-A with epoxides of the following formula, wherein n is more than 3 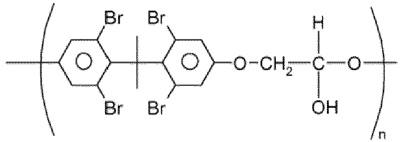 (e.g. FR 2300 and 2400 from DSB),
brominated oligostyrenes, preferably having an average degree of polymerization (number average) between 3 and 90, more preferably between 5 and 60, as measured by vapor pressure osmometry in toluene, and brominated polystyrenes.

Preferred brominated oligostyrenes have the formula (I) below, wherein R is hydrogen or an aliphatic moiety, in particular an alkyl moiety, such as, for example, CH₃ or C₂H₅ and n is the number of the repeating chain units and is preferably up to 124, more preferably 10 to 100, R¹ can be either H or else bromine or else a fragment of a conventional free-radical generator:

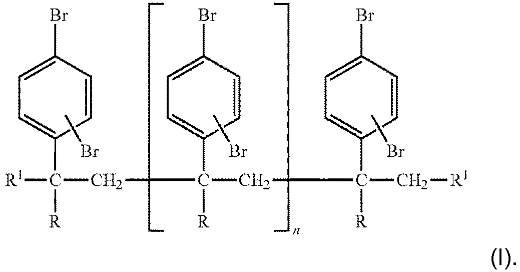

The brominated oligostyrenes preferably comprise from 40 to 80% by weight, more preferably from 55 to 70% by weight of bromine. Preference is given to a product composed mainly of po-lydibromostyrene. The substances can be melted without decomposition and are by way of example soluble in tetrahydrofuran. They can be produced either by ring bromination of - optionally aliphatically hydrogenated - styrene oligomers of the type that are obtained by way of example by thermal polymerization of styrene (according to DT-OS 25 37 385) or by free-radical oligomerization of suitable brominated styrenes. The brominated oligostyrenes can also be produced by ionic oligomerization of styrene and subsequent bromination.

The brominated polystyrenes are usually obtained by the process described in EP-A 47 549:

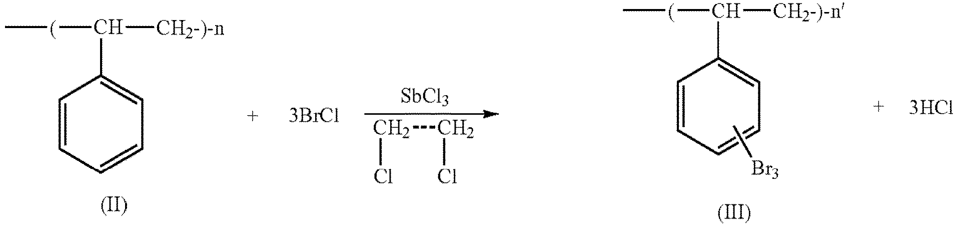

The brominated polystyrenes obtainable by said process and commercially are mainly ring-substituted tribrominated products. n' (see III) generally has values of from 125 to 1500, corresponding to a molecular weight of from 42500 to 235000, preferably from 130000 to 135000.

Bromine content (based on the content of ring-substituted bromine) is generally at least 50% by weight, preferably at least 60% by weight and in particular 65% by weight.

The pulverulent products obtainable commercially generally have a glass transition temperature of from 160 to 200°C and are obtainable by way of example as HP 7010 from Albemarle and Pyrocheck PB 68) from Ferro Corporation.

It is also possible to use mixtures of the brominated oligomeric styrenes and brominated polystyrenes, in any mixing ratio.

A suitable chlorine-containing flame retardant is for example declorane plus of the following formula:

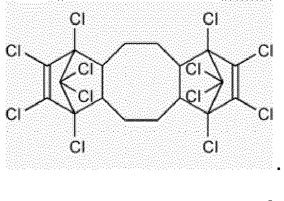

Further halide-containing flame retardants are for example disclosed in EP-A-1477520 or WO 2013/085789.

### Component D)

The molding compositions of the present invention comprise, as component D), from 0 to 40% by weight of other additives, preferably from 0,1 to 35% by weight, more preferably from 0,5 to 32% by weight of one or more additive(s), where the total of the percentages by weight of components A) to D) is 100%.

The term "additives" in the meaning of the present invention covers additives as well as processing agents.

Suitable additives D) are:
Fibrous or particulate fillers D1), for example glass fibers, aramid fibers and potassium titanate fibers, glass beads, amorphous silica, calcium silicate, calcium metasilicate, magnesium carbonate, kaolin, chalk, quartz powder, mica, barium sulfate, feldspar, talc, magnesium hydroxide, and wollastonite, especially wollastonite needles, and mixtures of the fillers mentioned before.

Further suitable fillers are laser-absorbent fillers, such as carbon fibers, carbon black, graphite, graphene or carbon nanotubes. The amount of laser-absorbent fillers is generally below 1% by weight, preferably below 0.01% by weight, based on the thermoplastic molding composition.

Acicular mineral fillers are also suitable. For the purpose of the present invention, acicular mineral fillers are mineral fillers with strongly developed acicular character. An example is acicular wollastonite. The acicular minerals preferably have an L/D (length to diameter) ratio of from 8:1 to 35:1, more preferably from 9:1 to 11:1.

Preferred fibrous fillers are glass fibers, aramid fibers and potassium titanate fibers, and mixtures thereof, whereby glass fibers are particularly preferred. Glass fibers are even more preferably present in form of E glass. These can be used in the form of rovings or chopped glass.

Preferred particulate or acicular mineral fillers are talc, magnesium hydroxide, and wollastonite, especially wollastonite needles, and mixtures thereof.

Most preferably are glass fibers, especially in form of E glass.

The fibrous fillers as well as the particulate fillers (and the laser-absorbent fillers and acicular mineral fillers) can be surface-pretreated with a silane compound.

Suitable silane compounds are those of the general formula

(X(DH₂)ₙ)ₓ-Si-(O-CₘH₂ₘ₊₁)_{4-K}

in which the definitions of the substituents are as follows:
x is 1 to 2,
n is 2 to 10, preferably 3 to 4,
m is 1 to 5, preferably 1 to 2,
k is 1 to 3, preferably 1.

Preferred silane compounds are aminopropyltrimethoxysilane, aminobutyltrimethoxysilane, aminopropyltriethoxysilane, aminobutyltriethoxysilane, and the corresponding silanes which comprise a glycidyl group as substituent.

The amounts generally used of the silane compounds or surface coating are from 0.05 to 5% by weight, preferably by 0.1 to 1.5% by weight, and in particular from 0.2 to 0.5% by weight (based on the filler).

Further additives D) which may be used in thermoplastic molding compositions according to the present invention are elastomeric polymers, often also termed "impact modifiers", "elastomers" or "rubbers" D2).

Very generally, these are copolymers which are preferably composed of at least two of the following monomers: ethylene, propylene, butadiene, isobutene, isoprene, chloroprene, vinyl acetate, styrene, acrylonitrile, and acrylic or methacrylic esters having preferably from 1 to 18 carbon atoms in the alcohol component.

Polymers of this type are known in the art.

Preferred types of elastomeric polymers are ethylene propylene (EPM) rubbers, ethylenepropylene-diene (EPDM) rubbers, EPM rubbers grafted with reactive carboxylic acids or with derivatives thereof, EPDM rubbers grafted with reactive carboxylic acids or with derivatives thereof, copolymers of ethylene with acrylic acid and/or methacrylic acid and/or with the esters of these acids, wherein said rubbers may additionally comprise dicarboxylic acids or derivatives of these acids and/or monomers comprising epoxy groups, emulsion polymers, which may be homopolymers or copolymers and graft polymers, like ABS polymers and/or ASA polymers, or homogeneous polymers, i.e. single-shell elastomers, preferably composed of 1,3-butadiene, isoprene and n-butylacrylate or copolymers thereof.

ABS and/or ASA polymers are for example used in amounts up to 40% by weight, based on the thermoplastic molding composition, for the impact modification, for example of PBT, optionally in a mixture with up to 40% by weight, based on the thermoplastic molding composition, of polyethylene terephthalate. Blend products of these types are commercially available, for example under the trademark Ultradur^{®} S of BASF SE.

Further suitable components D) are halide-free flame retardants D3), especially of the group of phosphor and/or nitrogen comprising halide free flame retardants. Suitable flame retardants which do not comprise halide are known by a person skilled in the art and for example disclosed in EP-A-1477520.

Further suitable components D) are lubricants, mold-release agents and plasticizers as usual processing aids, D4).

Suitable lubricants and mold-release agents are long-chain fatty acids (e.g. stearic acid or behenic acid), metal salts of these (e.g. Ca stearate or Zn stearate), or montane waxes (mixtures of straight-chain saturated carboxylic acids having chain lengths of from 28 to 32 carbon atoms), Ca montanate or Na montanate, ester waxes (reaction products of long chain monovalent wax acids (C₂₂-C₃₄) and monovalent fatty or wax alcohols (C₂₄-C₃₂)), amid waxes (reaction products of technical fatty acids, fatty acid esters or triacylglycerols, with ammonia or monovalent or polyvalent amines as well as amino alcohols), and also low-molecular-weight polyethylene waxes and low-molecular-weight polypropylene waxes. Said lubricants and mold release agents are preferably employed in an amount of 0 to 1% by weight, preferably 0.1 to 0.9% by weight, based on the thermoplastic molding composition.

Further suitable components D) are metal deactivators, nucleation agents, acid scavengers, carbon black, oxidation retarders (antioxidants), agents to counteract the composition due to heat and decomposition due to ultraviolet light, and colorants, such as dyes and pigments, as further usual processing aids D5).

Examples for suitable oxidation retardants and heat stabilizers are sterically hindered phenols and/or phosphites, thiosynergists, hydroquinones, aromatic secondary amines, such as diphenyl amines, various substituted members of this group, and mixtures of these, preferably in an amount of 0 to 1% by weight, preferably 0.1 to 0.9% by weight, based on the thermoplastic molding composition.

UV stabilizers are for example various substituted resorcinols, salicylates, benzotriazoles and benzophenones. Said UV stabilizers are preferably employed in an amount of 0 to 2% by weight, preferably 0.1 to 1.9% by weight, based on the thermoplastic molding composition.

Colorants that may be added are inorganic or organic pigments, and also dyes, for example anthraquinones. Suitable colorants are for example mentioned in EP 1 722 984 B1, EP 1 353 986 B1 or DE 100 54 859 A1. Said colorants are preferably employed in an amount of 0 to 1% by weight, preferably 0.1 to 0.9% by weight, based on the thermoplastic molding composition.

A further class of processing aids are esters or amides of saturated or unsaturated aliphatic carboxylic acids, generally having from 10 to 40, preferably from 16 to 23 carbon atoms with saturated aliphatic alcohols or amines which generally comprise from 2 to 40, preferably from 2 to 6 carbon atoms.

The carboxylic acids can be mono- or dibasic. Examples which may be mentioned are pelar-gonic acid, palmitic acid, lauric acid, margaric acid, dodecanedioic acid, behenic acid, stearic acid, capric acid and montanic acid (a mixture of fatty acids having from 30 to 40 carbon atoms), whereby stearic acid, capric acid and montanic acid are particularly preferred.

The aliphatic alcohols can be mono- to tetrahydric. Examples of alcohols are n-butanol, n-octanol, stearyl alcohol, ethylene glycol, propylene glycol, neopentyl glycol, and pentaerythritol, and glycerol, whereby pentaerythritol and glycerol are preferred.

The aliphatic amines can be mono- or tribasic. Examples of these are stearyl amine, ethylene diamine, propylene diamine, hexamethylene diamine, and di(6-aminohexyl)amine, whereby ethylene diamine and hexamethylene diamine are preferred. Preferred esters or amides are correspondingly glycerol distearate, glycerol tristearate, ethylenediamine distearate, glycerol monopalmitate, glycerol trilaurate, glycerol monobehenate and pentaerythritol tetrastearate. It is also possible to use mixtures of various esters or amides, or esters with amides in combination, in any desired mixing ratio.

The thermoplastic molding composition of the present invention can be produced by processes known in the art, for example by mixing the starting components in conventional mixing apparatuses such as screw-based extruders, Brabender mixers, or Banbury mixers, and then extruding same. The extrudates can be cooled and comminuted. It is also possible to pre-mix individual components (an example being application in a drum or otherwise, of individual components to pelletized material) and then to add the remaining starting materials individually, and/or likewise in form of a mixture and/or in form of a masterbatch. The mixing temperatures are generally from 230 to 320°C. Component B) can alternatively be added by a hot-feed method or directly to the extruder intake.

The molding compositions of the present invention feature good electrical and flame-retardant properties. Further, the molding compositions of the present invention are characterized by a high glow-wire resistance (the glow-wire resistance has been defined above).

The present invention therefore further concerns a method of producing fibers, foils, and moldings comprising the use of the thermoplastic molding composition according to the present invention as well as a fiber, foil or molding, preferably an injection-molded electronic component, obtained from the thermoplastic molding composition according to the present invention.

The moldings produced from the inventive molding compositions are for example used for the production of internal and external parts, preferably with load-bearing or mechanical function in any of the following sectors: electrical, furniture, sports, mechanical engineering, sanitary and hygiene, medical, power engineering and drive technology, automobile and other means of transport, or housing material for equipment and apparatuses for telecommunications, consumer electronics, household devices, mechanical engineering, the heating sector or fastening parts for installation work, or for containers and ventilation parts of any type.

Particularly, the thermoplastic molding compositions of the present invention are suitable for applications as plugs, switches, housing parts, housing covers, headlamps (bezels), shower heads, fittings, smoothing irons, rotary switches, stove controls, fryer lids, door handles, (rear) mirror housings, (tailgate) screen wipers, and sheathing for optical conductors.

Devices which can be produced by the thermoplastic molding composition according to the present invention in the electrical and electronic sector are: plugs, plug parts, plug connectors, cable-harness components, circuit mounts, circuit mount components, three-dimensionally injection-molded circuit mounts, electrical connector elements, mechatronic components, and optoelectronic components.

Possible uses in automobile interiors are: dashboards, steering-column switches, seat parts, headrests, center consoles, gearbox components, and door modules; and possible uses in automobile exteriors are: door handles, headlamp components, exterior mirror components, windshield wiper components, windshield wiper protective housings, decorative grilles, roof rails, roof frames and exterior bodywork parts.

Possible uses of the thermoplastic molding compositions of the present invention in the kitchen and household sector are: production of components for kitchen equipment, e.g. fryers, smoothing irons, buttons, and also garden and leisure sector applications, e.g. components for irrigation systems or garden equipment.

The invention is further illustrated by the following examples.

### Examples

### Production of the molding compositions / test specimen

The molding compositions were manufactured by melt compounding. For this, the individual components were mixed in a twin-screw extruder ZSK 26 (Berstorft) with a turnover rate of 20 kg/h and about 250 to 270°C with a flat temperature profile, extruded in the form of strands, cooled until pelletizable and pelletized.

The test specimens for the tests mentioned in the following table were injection-molded at a melt temperature of about 250 to 290°C and a mold temperature of about 80°C in an Arburg 420C injection molding machine.

The flame retardancy of the molding material was determined by method UL94-V (Underwriters Laboratories Inc. Standard of Safety, "Test for Flammability of Plastic Materials for Parts in Devices and Appliances", pages 14 to 18, Northbrook 1998).

The glow-wire resistance was determined by determining the Glow-Wire Flammability Index (GWFI) according to IEC 60695-2-12.

GWFI was determined by conducting the glow-wire test on three test specimens (for example on test plates having a geometry 60 x 60 x 1.0 mm or a round disc). By aids of a glowing wire at temperatures between 550 and 960°C, the highest temperature was determined, at which the material in three subsequent tests did not ignite during the contact time of the glowing wire. The test specimen was pressed for 30 seconds with a power of 1 Newton against a heated glowing wire. The penetration of the glowing wire was limited to 7 mm. The test is passed when the test specimen afterglows for less than 30 seconds after removal of the glowing wire and when a tissue paper lying under the test specimen is not ignited.

The glow-wire resistance was further determined by measuring the Glow-Wire Ignition Temperature (GWIT) according to DIN EN 60695-2-13. In the GWIT test, the maximum temperature was determined, at which in three subsequent tests also during the contact time of the glowing wire, no ignition occurred. The GWIT test was conducted at three test specimens (for example plates having a geometry 60 x 60 x 1.5 mm) by aid of a glowing wire at temperatures between 550 and 960°C. The GWIT specified was 25K above the maximum temperature determined. As criterion of the ignition, a flame with a burning time > 5 seconds is applied.

The resistance to exposure of voltage (Comparative Tracking Index = CTI value) was determined according to the determination of the resistance to exposure of voltage according to IEC 60112.

In the examples, the following components have been used:
Component A:
   Ultradur^{®} B4520 of BASF SE (PBT having a viscosity number according to DIN 53728 of 130 cm³/g).
Component B1:
   An aluminum salt of the (commercially available) DOPO acid (10-hydroxy-9,10-dihydro-9-oxa-10-phosphophenantrenoxide = DOPOX) was prepared by following instructions:
   In a glass bulb 355.2 g (8.610 mol) of NaOH were dissolved in 1 I deionized water in portion under stirring. This solution was thereby cooled. In the meantime, in a 20 I beaker 2000 g (8.610 mol) DOPOX were suspended in 10 I deionized water. The NaOH solution prepared was then added to the DOPOX suspension in portion during 60 min under stirring, and rinsed with deionized water. Thereby, a brown-black solution was formed which is stirred until the complete solids were dissolved. Subsequently, 693.4 g (2.870 mol) aluminum chloride hexahydrate were dispersed in 2.5 I deionized water in portion, and subsequently added to the reaction mixture in portion during 60 min, whereby the end product precipitated as a solid. The reaction mixture was stirred for 2 h at room temperature, and after 24 h, the solid is filtered and suspended in 12 I of deionized water under vigorous stirring. The solids were subsequently filtered and again rinsed with deionized water and dried in vacuum at 130°C.
Component B2:
   An iron(lll) salt of the (commercially available) DOPO acid (10-hydroxy-9,10-dihydro-9-oxa-10-phosphophenantrenoxide = DOPOX) was prepared by following instructions:
   On the previous day, 177.6 g (4.31 mol) of NaOH in 0.5 I deionized water were solved in portion under stirring. This solution was thereby cooled. The reaction vessel is stored closed until use. In a 20 I beaker 1000 g (4.31 mol) DOPOX were suspended in 5 I deionized water. The NaOH solution prepared was added to the DOPOX suspension in portion during 60 min under stirring and rinsed with deionized water. Thereby, a brown-black solution was formed which was stirred until the complete solids were dissolved. In the meantime, 386.39 g (1.43 mol) iron chloride hexahydrate were dispersed in 1 I deionized water in portion, and subsequently added to the reaction mixture in portion during 60 min, and rinsed with deionized water. A solid precipitated immediately. The reaction mixture was stirred for 2 h at room temperature, and stands overnight, for sedimentation of the solids. The solids were filtered and vigorously stirred in 6 I of deionized water for 1h. The solids were filtered and rinsed with deionized water. Subsequently, the solids were dried in vacuum first at 80°C and later at 130°C in vacuum.
Component C1/a:
   Brominated flame retardant based on tetrabromobisphenol A (BC-52^{™} of Lanxess).
Component C2:
   Commercially available PTFE powder is used (3M-Dyneon GmbH).
Component C3:
   Commercially available calcium hypophosphite is used (Phoslite IP-C^{®} of Italmatch Chemicals S.P.A.).
Component D:
   A short glass fiber PPG 3786 (PPG Industries, Inc.) having a diameter of 10 µm is used.

**Table 1**

| Component / test method | V1 (comparative example) | E1 (inventive example) |
|---|---|---|
| A | 39.75 | 39.75 |
| B1 | | 10 |
| B2 | | |
| C1/a | 20 | 20 |
| C1/b | | |
| C1/c | | |
| C2 | 0.25 | 0.25 |
| C3 | 10 | |
| D | 30 | 30 |
| Tensile modulus of elasticity [MPa] (ISO 527) | 12330 | 11370 |
| Tensile stress [MPa] (ISO 527) | 128 | 104 |
| Elongation at break [%] (ISO 527) | 1.7 | 1.4 |
| HDT (heat deflection temperature) A [°C] | 192 | 191 |
| MVR (Melt Volume-flow Rate) 275°C / 5 kg (ISO1133) | 6 | 10 |
| UL94-V test (0.8 mm) | V-2 | V-0 |
| UL94-V test (0.4 mm) | V-2 | V-0 |
| GWFI 960°C / 0.75 mm | fulfilled | fulfilled |
| GWIT max / 0,75 mm [°C] | 850 | 850 |
| GWFI 960°C / 1.5 mm | fulfilled | fulfilled |
| GWIT max / 1.5 mm [°C] | 850 | 900 |
| CTI [V] | 175 | 175 |

It is clear from the data shown in Table 1 that the inventive composition shows superior values concerning the fire behavior according to UL94-V (V-0 classification) compared with the prior art (comparative example V1 in the self-extinguishing properties (no flaming droplets).

## Claims

1. A thermoplastic molding composition comprising
A) from 10 to 98% by weight of a thermoplastic polyester
B) from 0.5 to 20% by weight of a metal salt of the following formula (I): 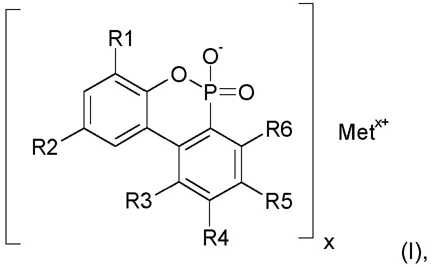 wherein
R¹, R², R³, R⁴, R⁵ and R⁶
are each independently hydrogen or C₁-C₄ alkyl;
x is 1, 2, 3 or 4;
Met is a metal respectively metalloid of the 1^{st}, 2^{nd}, 13^{th}, 14^{th} or 15^{th} group of the periodic table of elements (IUPAC), a transition metal of the 3^{rd} to 12^{th} group of the periodic table of elements (IUPAC), a lanthanoid metal or an oxy derivative of one of the metals, metalloids or transition metals mentioned;
C) from 1.5 to 30% by weight of a flame retardant combination made of
C1) a halogen-containing flame retardant
C2) an antidripping agent
D) from 0 to 50% by weight of other additives,
where the total of the percentages by weight of components A) to D) is 100%.

2. The thermoplastic molding composition according to claim 1, wherein the thermoplastic molding composition is free of diantimony trioxide (Sb₂O₃).

3. The thermoplastic molding composition according to claim 1 or 2, wherein Met in the metal salt B) is a metal respectively metalloid of the 13^{th}, 14^{th} or 15^{th} group of the periodic table of elements (IUPAC), a transition metal of the 3^{rd} to 12^{th} group of the periodic table of elements (IUPAC), a lanthanoid metal or an oxy derivative of one of the metals, metalloids or transition metals mentioned.

4. The thermoplastic molding composition according to any one of claims 1 to 3, wherein Met is selected from the group consisting of Al, Ge, Sn, Bi, Ti, V, Cr, Mn, Fe, La, Ce, OTi, OV, OCr, OSn and OBi, preferably Met is Al and x is 3.

5. The thermoplastic molding composition according to any one of claims 1 to 4, wherein R¹, R², R³, R⁴, R⁵ and R⁶ are hydrogen.

6. The thermoplastic molding composition according to any one of claims 1 to 5, wherein the thermoplastic polyester A) is a semi-crystalline or amorphous polyester, based on dicarboxylic acids and diols, having a viscosity number of 50 to 180 mL/g, more preferably 80 to 150 mL/g, determined in a 0.5% by weight solution in phenol/o-dichlorobenzene (1:1) at 25°C according to DIN 53728/ISO 307.

7. The thermoplastic molding composition according to claim 6, wherein the dicarboxylic acids are aliphatic or aromatic dicarboxylic acids having 4 to 18 carbon atoms, preferably selected from the group consisting of phthalic acid, terephthalic acid, dimethyl terephthalic acid, isophthalic acid, naphthalene-1,4-dicarboxylic acid, naphthalene-2,3-dicarboxylic acid, naphthalene-2,6-dicarboxylic acid, cyclohexanedicarboxylic acid, cyclohexanediacetic acid, diphenyl-4,4'-dicarboxylic acid, succinic acid, glutaric acid, adipic acid, azelaic acid and sebacic acid and mixtures thereof, more preferably selected from terephthalic acid and naphthalene dicarboxylic acid or a mixture thereof.

8. The thermoplastic molding composition according to claim 6 or 7, wherein the diols are selected from the group consisting of cycloaliphatic diols having 6 to 20 carbon atoms and aliphatic diols having 2 to 20 carbon atoms, preferably selected from the group consisting of ethylene glycol, diethylene glycol, triethylene glycol, 1,4-cyclohexane dimethanol, propane-1,3-diol, propane-1,2-diol, butane-1,2-diol, butane-1,4-diol, pentane-1,5-diol, hexane1,6-diol, 3-methylpentane-2,4-diol, 2-methylpentane-1,4-diol, 2,2,4-trimethylpentane-1,3-diol, hexane-1,3-diol, hexane-1,4-diol, 2,2-bis(4-hydroxycyclohexyl)propane and 2,4-dihydroxy-1,1,3,3-tetramethylcyclobutane isosorbitol, poly(alkylene oxide) glycols containing a total of 3 to 12 carbon atoms including up to 3 or 4 oxygen atoms with the remaining atoms being hydrocarbon atoms, preferably poly(oxyethylene)diol, poly(oxypropylene)diol, or poly(oxytetramethylene)diol, and mixtures thereof, more preferably ethylene glycol, butane-1,4-diol or propane-1,3-diol, poly(oxyethylene)diol, poly(oxypropylene)diol, or poly(oxytetramethylene)diol, and mixtures thereof.

9. The thermoplastic molding composition according to any one of claims 1 to 8, wherein component C) comprises
from 95 to 99.95% by weight of C1) and
from 0.05 to 5% by weight of C2).

10. The thermoplastic molding composition according to any one of claims 1 to 9, wherein the antidripping agent C2) is a compound selected from the group consisting of fluorine-containing polymers, siloxane based antidripping agents, and mixtures thereof, preferably, the antidripping agent comprises or is a fluorine-containing polymer or a siloxane.

11. The thermoplastic molding composition according to claim 10, wherein the fluorine-containing polymers are selected from the group consisting of poly(tetrafluoroethylene), tetrafluoroethylene/hexafluoropropylene copolymers, tetrafluoroethylene/ethylene copolymers, poly(vinylidene fluoride), poly(chlorotrifluoroethylene), and mixtures thereof, preferably poly(tetrafluoroethylene) and the siloxane based antidripping agent comprises polydimethylsiloxane.

12. The thermoplastic molding composition according to any one of claims 1 to 11, wherein component C1) is a bromine or chlorine containing flame retardant, preferably a bromine containing flame retardant.

13. The thermoplastic molding composition according to claim 12, wherein the bromine containing flame retardant is selected from the group consisting of brominated diphenyl ether, brominated trimethylphenylindane, tetrabromobisphenol A, hexabromocyclododecan, brominated oligocarbonates, preferably brominated oligocarbonates of tetrabromobisphenol A having the following formula, wherein n is more than 2: 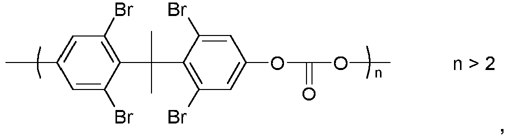 polypentabrombenzylacrylate of the following formula, wherein n is more than 4: 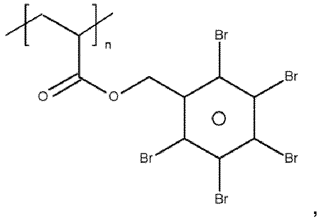 oligomeric reaction products of tetrabromobisphenol A with epoxides of the following formula, wherein n is more than 3: 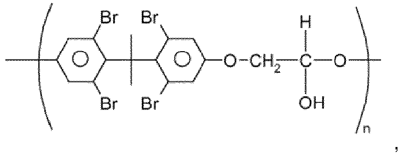 brominated oligostyrenes preferably having a mean degree of polymerization (number average) between 3 and 90, preferably between 5 and 60, as measured by vapor pressure osmometry in toluene, , and brominated polystyrenes; it is also possible to use mixtures of the brominated oligomeric styrenes and brominated polystyrenes, in any mixing ratio,
a suitable chlorine containing flame retardant is declorane plus of the following formula:

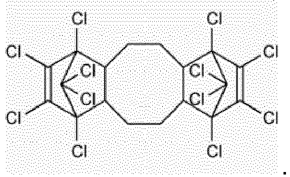

14. A method of producing fibers, foils, and moldings comprising the use of a thermoplastic molding composition according to any one of claims 1 to 13.

15. A fiber, foil, or molding, preferably an injection molded electronic component, obtained from a thermoplastic molding composition according to any one of claims 1 to 13.

## Patentansprüche

1. Thermoplastische Formzusammensetzung umfassend
A) von 10 bis 98 Gew.-% an einem thermoplastischen Polyester
B) von 0,5 bis 20 Gew.-% an einem Metallsalz der folgenden Formel (I): 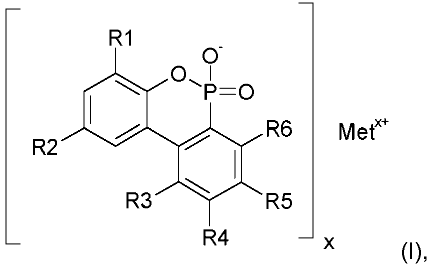 wobei
R¹, R², R³, R⁴, R⁵ und R⁶
jeweils unabhängig Wasserstoff oder C₁-C₄-Alkyl sind,
x 1, 2, 3 oder 4 ist;
Met ein Metall oder Metalloid der 1., 2., 13., 14. oder 15. Gruppe des Periodensystems der Elemente (IUPAC), ein Übergangsmetall der 3. bis 12. Gruppe des Periodensystems der Elemente (IUPAC), ein Lanthanoidmetall oder ein Oxyderivat eines der genannten Metalle, Metalloide oder Übergangsmetalle ist;
C) von 1,5 bis 30 Gew.-% an einer flammhemmenden Kombination bestehend aus
C1) einem halogenhaltigen Flammhemmer,
C2) einem Antitropfmittel,
D) von 0 bis 50 Gew.-% an anderen Zusatzstoffen,
wobei die Summe der Gewichtsprozentwerte der Komponenten A) bis D) 100 % beträgt.

2. Thermoplastische Formzusammensetzung nach Anspruch 1, wobei die thermoplastische Formzusammensetzung frei von Diantimontrioxid (Sb₂O₃) ist.

3. Thermoplastische Formzusammensetzung nach Anspruch 1 oder 2, wobei Met in dem Metallsalz B) ein Metall oder Metalloid der 13., 14. oder 15. Gruppe des Periodensystems der Elemente (IUPAC), ein Übergangsmetall der 3. bis 12. Gruppe des Periodensystems der Elemente (IUPAC), ein Lanthanoidmetall oder ein Oxyderivat eines der genannten Metalle, Metalloide oder Übergangsmetalle ist.

4. Thermoplastische Formzusammensetzung nach einem der Ansprüche 1 bis 3, wobei Met ausgewählt ist aus der Gruppe bestehend aus Al, Ge, Sn, Bi, Ti, V, Cr, Mn, Fe, La, Ce, OTi, OV, OCr, OSn und OBi, wobei vorzugsweise Met Al ist und x 3 ist.

5. Thermoplastische Formzusammensetzung nach einem der Ansprüche 1 bis 4, wobei R¹, R², R³, R⁴, R⁵ und R⁶ Wasserstoff sind.

6. Thermoplastische Formzusammensetzung nach einem der Ansprüche 1 bis 5, wobei der thermoplastische Polyester A) ein halbkristalliner oder amorpher Polyester auf der Grundlage von Dicarbonsäuren und Diolen mit einer Viskositätszahl von 50 bis 180 ml/g, bevorzugter 80 bis 150 ml/g, bestimmt in einer 0,5 Gew.-% Lösung in Phenol/o-Dichlorbenzol (1:1) bei 25°C nach DIN 53728/ISO 307, ist.

7. Thermoplastische Formzusammensetzung nach Anspruch 6, wobei die Dicarbonsäuren aliphatische oder aromatische Dicarbonsäuren mit 4 bis 18 Kohlenstoffatomen sind, vorzugsweise ausgewählt aus der Gruppe bestehend aus Phthalsäure, Terephthalsäure, Dimethylterephthalsäure, Isophthalsäure, Naphthalin-1,4-dicarbonsäure, Naphthalin-2,3-dicarbonsäure, Naphthalin-2,6-dicarbonsäure, Cyclohexandicarbonsäure, Cyclohexandiessigsäure, Diphenyl-4,4'-dicarbonsäure, Bernsteinsäure, Glutarsäure, Adipinsäure, Azelainsäure und Sebacinsäure und Gemischen davon, bevorzugter ausgewählt aus Terephthalsäure und Naphthalindicarbonsäure oder einem Gemisch davon.

8. Thermoplastische Formzusammensetzung nach Anspruch 6 oder 7, wobei die Diole ausgewählt sind aus der Gruppe bestehend aus cycloaliphatischen Diolen mit 6 bis 20 Kohlenstoffatomen und aliphatischen Diolen mit 2 bis 20 Kohlenstoffatomen, vorzugsweise ausgewählt aus der Gruppe bestehend aus Ethylenglycol, Diethylenglycol, Triethylenglycol, 1,4-Cyclohexandimethanol, Propan-1,3-diol, Propan-1,2-diol, Butan-1,2-diol, Butan-1,4-diol, Pentan-1,5-diol, Hexan-1,6-diol, 3-Methylpentan-2,4-diol, 2-Methylpentan-1,4-diol, 2,2,4-Trimethylpentan-1,3-diol, Hexan-1,3-diol, Hexan-1,4-diol, 2,2-Bis(4-hydroxycyclohexyl)propan und 2,4-Dihydroxy-1,1,3,3-tetramethylcyclobutanisosorbit, Poly(alkylenoxid)glycolen mit insgesamt 3 bis 12 Kohlenstoffatomen mit bis zu 3 oder 4 Sauerstoffatomen, wobei die restlichen Atome Kohlenwasserstoffatome sind, vorzugsweise Poly(oxyethylen)diol, Poly(oxypropylen)diol oder Poly(oxytetramethylen)diol und Gemischen davon, bevorzugter Ethylenglycol, Butan-1,4-diol oder Propan-1,3-diol, Poly(oxyethylen)diol, Poly(oxypropylen)diol oder Poly(oxytetramethylen)diol und Gemischen davon.

9. Thermoplastische Formzusammensetzung nach einem der Ansprüche 1 bis 8, wobei Komponente C) umfasst
von 95 bis 99,95 Gew.-% C1) und
von 0,05 bis 5 Gew.-% C2).

10. Thermoplastische Formzusammensetzung nach einem der Ansprüche 1 bis 9, wobei das Antitropfmittel C2) eine Verbindung ausgewählt aus der Gruppe bestehend aus fluorhaltigen Polymeren, Antitropfmitteln auf Siloxanbasis und Gemischen davon ist, wobei das Antitropfmittel vorzugsweise ein fluorhaltiges Polymer oder ein Siloxan umfasst oder ist.

11. Thermoplastische Formzusammensetzung nach Anspruch 10, wobei die fluorhaltigen Polymere ausgewählt sind aus der Gruppe bestehend aus Poly(tetrafluorethylen), Tetrafluorethylen/Hexafluorpropylen-Copolymeren, Tetrafluorethylen/Ethylen-Copolymeren, Poly(vinylidenfluorid), Poly(chlortrifluorethylen) und Gemischen davon, vorzugsweise Poly(tetrafluorethylen), und das Antitropfmittel auf Siloxanbasis Polydimethylsiloxan umfasst.

12. Thermoplastische Formzusammensetzung nach einem der Ansprüche 1 bis 11, wobei Komponente C1) ein brom- oder chlorhaltiger Flammhemmer ist, vorzugsweise ein bromhaltiger Flammhemmer.

13. Thermoplastische Formzusammensetzung nach Anspruch 12, wobei der bromhaltige Flammhemmer ausgewählt ist aus der Gruppe bestehend aus bromiertem Diphenylether, bromiertem Trimethylphenylindan, Tetrabrombisphenol A, Hexabromcyclododecan, bromierten Oligocarbonaten, vorzugsweise bromierten Oligocarbonaten von Tetrabrombisphenol A mit der folgenden Formel, wobei n größer als 2 ist: 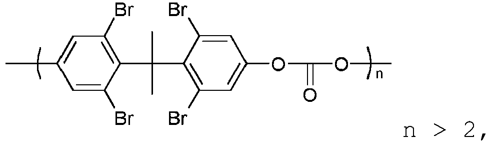 Polypentabrombenzylacrylat der folgenden Formel, wobei n größer als 4 ist: 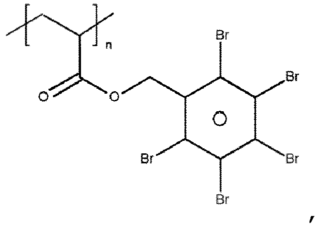 oligomeren Reaktionsprodukten von Tetrabrombisphenol A mit Epoxiden der folgenden Formel, wobei n größer als 3 ist: 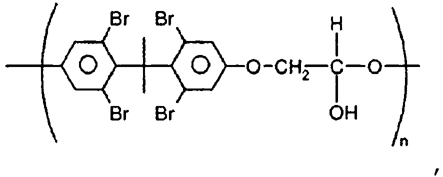 bromierten Oligostyrolen mit vorzugsweise einem mittleren Polymerisationsgrad (anzahlgemittelt) zwischen 3 und 90, vorzugsweise zwischen 5 und 60, gemessen durch Dampfdruckosmometrie in Toluol, und bromierten Polystyrolen; es können auch Gemische der bromierten oligomeren Styrole und bromierten Polystyrole in jedem Mischungsverhältnis eingesetzt werden,
wobei ein geeigneter chlorhaltiger Flammhemmer Decloran plus der folgenden Formel ist:

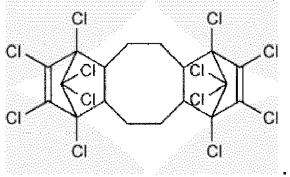

14. Verfahren zur Herstellung von Fasern, Folien und Formkörpern, umfassend die Verwendung einer thermoplastischen Formzusammensetzung nach einem der Ansprüche 1 bis 13.

15. Faser, Folie oder Formkörper, vorzugsweise eine spritzgegossene Elektronikkomponente, erhalten aus einer thermoplastischen Formzusammensetzung nach einem der Ansprüche 1 bis 13.

## Revendications

1. Composition de moulage thermoplastique comprenant
A) de 10 à 98 % en poids d'un polyester thermoplastique
B) de 0,5 à 20 % en poids, d'un sel métallique de la formule suivante (I) : 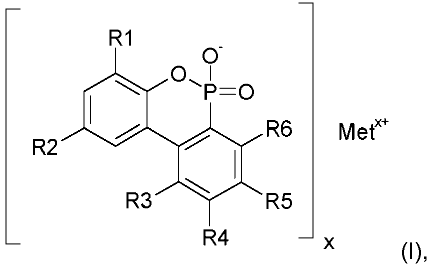 avec
R¹, R², R³, R⁴, R⁵ et R⁶
chacun étant indépendamment l'hydrogène ou un alkyle en C₁-C₄ ;
x étant 1, 2, 3 ou 4 ;
Met étant un métal respectivement métalloïde du 1^{er}, 2^{e}, 13^{e}, 14^{e} ou 15^{e} groupe de la classification périodique des éléments (IUPAC), un métal de transition du 3^{e} à 12^{e} groupe de la classification périodique des éléments (IUPAC), un métal lanthanoïde ou un dérivé oxy de l'un des métaux, métalloïdes ou métaux de transition mentionnés ;
C) de 1,5 à 30 % en poids d'un agent ignifugeant constitué de
C1) un agent ignifugeant contenant un halogène
C2) un agent anti-goutte
D) de 0 à 50 % en poids d'autres produits additionnels ;
le total des pourcentages en poids des composants A) à D) étant de 100 %.

2. Composition de moulage thermoplastique selon la revendication 1, la composition de moulage thermoplastique étant exempte de trioxide de diantimoine (Sb₂O₃).

3. Composition de moulage thermoplastique selon la revendication 1 ou 2, Met dans le sel métallique B) étant un métal respectivement métalloïde du 13^{e}, 14^{e} ou 15^{e} groupe du tableau périodique des éléments (IUPAC), un métal de transition du 3^{e} au 12^{e} groupe du tableau périodique des éléments (IUPAC), un métal lanthanoïde ou un dérivé oxy de l'un des métaux, métalloïdes ou métaux de transition mentionnés.

4. Composition de moulage thermoplastique selon l'une quelconque des revendications 1 à 3, Met étant choisi dans le groupe constitué par Al, Ge, Sn, Bi, Ti, V, Cr, Mn, Fe, La, Ce, OTi, OV, OCR, OSn et OBi, de préférence Met étant Al et x étant 3.

5. Composition de moulage thermoplastique selon l'une quelconque des revendications 1 à 4, R¹, R², R³, R⁴, R⁵ et R⁶ étant l'hydrogène.

6. Composition de moulage thermoplastique selon l'une quelconque des revendications 1 à 5, le polyester thermoplastique A) étant un polyester semi-cristallin ou amorphe, à base d'acides dicarboxyliques et de diols, ayant un indice de viscosité de 50 à 180 mL/g, plus préférablement de 80 à 150 mL/g, déterminé dans une solution à 0,5 % en poids dans du phénol/o-dichlorobenzène (1:1) à 25 °C selon DIN 53728/ISO 307.

7. Composition de moulage thermoplastique selon la revendication 6, les acides dicarboxyliques étant des acides dicarboxyliques aliphatiques ou aromatiques ayant 4 à 18 atomes de carbone, de préférence choisis dans le groupe constitué par l'acide phtalique, l'acide téréphtalique, l'acide diméthyltéréphtalique, l'acide isophtalique, le naphtalène-1, l'acide 4-dicarboxylique, l'acide naphthalène-2,3-dicarboxylique, l'acide naphthalène-2,6-dicarboxylique, l'acide cyclohexanedicarboxylique, l'acide cyclohexanediacétique, l'acide diphényl-4,4'-dicarboxylique, l'acide succinique, l'acide glutarique, l'acide adipique, l'acide azélaïque, l'acide sébacique et leurs mélanges, de préférence encore choisi parmi l'acide téréphtalique et l'acide naphtalène dicarboxylique ou un de leurs mélanges.

8. Composition de moulage thermoplastique selon la revendication 6 ou 7, les diols étant choisis dans le groupe constitué par les diols cycloaliphatiques ayant 6 à 20 atomes de carbone et les diols aliphatiques ayant 2 à 20 atomes de carbone, de préférence choisis dans le groupe constitué par l'éthylèneglycol, le diéthylèneglycol, le triéthylèneglycol, le 1,4-cyclohexanediméthanol, le propane-1,3-diol, le propane-1,2-diol, le butane-1,2-diol, le butane-1,4-diol, le pentane-1,5-diol, l'hexane 1,6-diol, le 3-méthylpentane-2,4-diol, le 2-méthylpentane-1,4-diol, le 2,2,4-triméthylpentane-1,3-diol, l'hexane-1,3-diol, l'hexane-1,4-diol, le 2,2-bis(4-hydroxycyclohexyl) propane et le 2,4-dihydroxy-1,1,3,3-tétraméthylcyclobutane-isosorbitol, les poly(oxyde d'alkylène) glycols contenant un total de 3 à 12 atomes de carbone comportant jusqu'à 3 ou 4 atomes d'oxygène avec les atomes restants étant des atomes hydrocarbonés, de préférence le poly(oxyéthylène)diol, le poly(oxypropylène)diol, ou le poly(oxytétraméthylène) diol, et leurs mélanges, plus préférentiellement l'éthylène glycol, le butane-1,4-diol ou le propane-1,3-diol, le poly(oxyéthylène)diol, le poly(oxypropylène)diol, ou le poly(oxytétraméthylène)diol, et leurs mélanges.

9. Composition de moulage thermoplastique selon l'une quelconque des revendications 1 à 8, le composant C) comprenant
de 95 à 99,95 % en poids de C1), et
de 0,05 à 5 % en poids de C2).

10. Composition de moulage thermoplastique selon l'une quelconque des revendications 1 à 9, l'agent anti-goutte C2) étant un composé choisi dans le groupe constitué par les polymères contenant du fluor, les agents anti-goutte à base de siloxane et leurs mélanges ; de préférence, l'agent anti-goutte comprenant ou étant un polymère contenant du fluor ou un siloxane.

11. Composition de moulage thermoplastique selon la revendication 10, les polymères contenant du fluor étant choisis dans le groupe constitué par le poly(tétrafluoroéthylène), les copolymères tétrafluoroéthylène/hexafluoropropylène, les copolymères tétrafluoroéthylène/éthylène, le poly(fluorure de vinylidène), le poly(chlorotrifluoroéthylène), et leurs mélanges, de préférence le poly(tétrafluoroéthylène) et l'agent anti-goutte à base de siloxane comprenant du polydiméthylsiloxane.

12. Composition de moulage thermoplastique selon l'une quelconque des revendications 1 à 11, le composant C1) étant un agent ignifugeant contenant du brome ou du chlore, de préférence un agent ignifugeant contenant du brome.

13. Composition de moulage thermoplastique selon la revendication 12, l'agent ignifugeant contenant du brome étant choisi dans le groupe constitué par le diphényléther bromé, le triméthylphénylindane bromé, le tétrabromobisphénol A, l'hexabromocyclododécan, les oligocarbonates bromés, de préférence, des oligocarbonates bromés de tétrabromobisphénol A ayant la formule suivante, n étant supérieur à 2 : 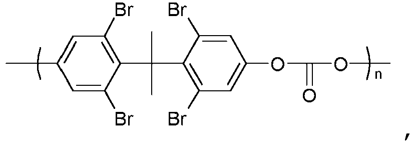 n > 2, le polypentabrombenzylacrylate de formule suivante, n étant supérieur à 4 : 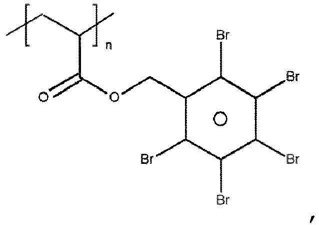 les produits de réaction oligomères du tétrabromobisphénol A avec des époxydes de la formule suivante, n étant supérieur à 3 : 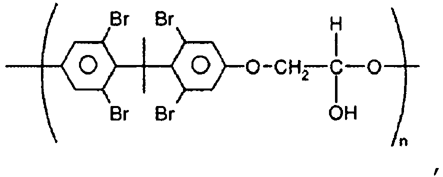 les oligostyrènes bromés ayant de préférence un degré de polymérisation moyen (moyen en nombre) compris entre 3 et 90, de préférence entre 5 et 60, tel que mesuré par osmométrie à pression de vapeur dans le toluène, et les polystyrènes bromés ; il est également possible d'utiliser des mélanges des styrènes oligomères bromés et des polystyrènes bromés, dans n'importe quel rapport de mélange,
un agent ignifugeant contenant du chlore approprié étant le declorane plus de formule suivante :

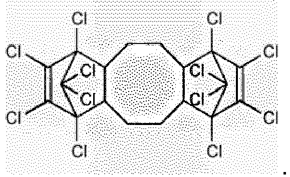

14. Procédé de production de fibres, de feuilles et de moulages comprenant l'utilisation d'une composition de moulage thermoplastique selon l'une quelconque des revendications 1 à 13.

15. Fibre, feuille ou moulage, de préférence un composant électronique moulé par injection, obtenu à partir d'une composition de moulage thermoplastique selon l'une quelconque des revendications 1 à 13.
